# EUROPÄISCHE PATENTSCHRIFT

(11) **EP 3 160 091 B1**
(45) Veröffentlichungstag und Bekanntmachung des Hinweises auf die Patenterteilung: **04.12.2024**
(21) Anmeldenummer: 16194942.5
(22) Anmeldetag: 20.10.2016
(51) Int. Cl.: H04L 12/40

(54) **VERFAHREN ZUR ÜBERMITTLUNG VON DATEN**
METHOD FOR DATA TRANSFER
PROCÉDÉ DE TRANSMISSION DE DONNÉES

(30) Priorität: 21.10.2015 DE 102015117947
(43) Veröffentlichungstag der Anmeldung: 26.04.2017
(73) Patentinhaber: Sontheim Industrie Elektronik GmbH, 87437 Kempten (DE)
(72) Erfinder: Sontheim, Bruno, 87437 Kempten (DE); Strobl, Stephan, 87437 Kempten (DE); Bottenbruch, Gerd, 87437 Kempten (DE); Lorenz, Martin, 87437 Kempten (DE)
(74) Vertreter: Patentanwaltzkanzlei Hutzelmann

(56) Entgegenhaltungen:
- DE-A1- 102006 006 250
- DE-T5- 112012 005 116
- DE-T5- 112014 000 357
- US-A1- 2015 100 774
- US-A1- 2017 187 572
- ANDREAS BERL ET AL: "Virtualisierung im Future Internet; Virtualisierungsmethoden und Anwendungen", INFORMATIK-SPEKTRUM ; ORGAN DER GESELLSCHAFT FÜR INFORMATIK E.V.UND MIT IHR ASSOZIIERTER ORGANISATIONEN, SPRINGER, BERLIN, DE, vol. 33, no. 2, 16 February 2010 (2010-02-16), pages 186 - 194, XP019800881, ISSN: 1432-122X
- HERNANDEZ-VALENCIA ENRIQUE ET AL: "How will NFV/SDN transform service provider opex?", IEEE NETWORK, IEEE SERVICE CENTER, NEW YORK, NY, US, vol. 29, no. 3, 1 May 2015 (2015-05-01), pages 60 - 67, XP011582742, ISSN: 0890-8044, [retrieved on 20150526], DOI: 10.1109/MNET.2015.7113227
- "Network Function Virtualization (NFV) Management and Orchestration;GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.7.0, 23 October 2014 (2014-10-23), pages 1 - 198, XP014216378
- ANONYMOUS: "Virtualisierung (Informatik) - Wikipedia", 8 October 2015 (2015-10-08), pages 1 - 4, XP055813037, Retrieved from the Internet <URL:https://de.wikipedia.org/w/index.php?title=Virtualisierung_(Informatik)&oldid=146790499> [retrieved on 20210611]

## Beschreibung

Die Erfindung bezieht sich auf ein Verfahren zur Übermittlung von Daten in einem verteilten System aus programmierbaren Steuerungen, wobei zwischen Datenquellen und Datensenken, die beide jeweils einen Knoten im verteilten System darstellen, Daten übertragen werden, wobei die jeweils miteinander kommunizierenden Datenquellen und Datensenken über Parameter bestimmt werden.

Derartige Steuerungen kommunzieren miteinander über ein Netzwerk, Feldbus oder dergleichen.

Dabei wird in den Programmroutinen hintelegt, welche Daten von einem Steuergerät an ein anderes gesendet oder von diesem empfangen werden sollen.

Auch die Adressierung des jeweils anderen Steuergerätes wird dabei in den Programmroutinen hinterlegt.

Dies ist jedoch mehr als problematisch, da selbst bei geringfügigen Änderungen, zum Beispiel durch Austausch eines Aggregates oder Steuergerätes diese Anpassung jedesmal im Programmcode vorgenommen werden muss. Allenfalls die Adressierung kann über Parameter bestimmt werden.

Hierdurch muss dann der gesamte Programmcode jedesmal einer Evaluierung und verschiedenen Tests unterzogen werden, um sicherzustellen, daß Fehlfunktionen wenigstens weitgehend ausgeschlossen sind.

Aus der US2015/0100774 A1 ist beispielsweise ein solches, über Konfigurationsdateien parametrierbares System bekannt.

Aus der DE 11 2012 005 116 T2 ist ein weiteres System bekannt, welches ein automatisches Management von Konfigurationsinformationen ermöglicht.

Aus der DE 10 2006 006 250 A1 ist ein Informationsverarbeitungssystem mit virtuellen Maschinen mit einem Verfahren zur zentralisierten Software-Verwaltung bekannt.

Aufgabe der Erfindung ist es, ein Verfahren vorzuschlagen, welches es ermöglicht, auf diese aufwendigen Evaluierungen und Tests, die auch erhebliche Kosten verursachen, zu verzichten.

Diese Aufgabe wird erfindungsgemäß dadurch gelöst, daß programmierbaren Steuerungen als Embedded-Systeme ausgeführt sind, die kein Betriebssystem aufweisen und daß die Programmroutinen, Kommunikationsfunktionen, Hardware APIs virtualisiert sind und daß die Programmroutinen, Kommunikationsfunktionen und Protokolle hardwareunabhängig ausgeführt sind.

Dadurch wird weitgehende Hardwareunabhängigkeit erreicht. Die Programmroutinen werden universell einsetzbar und können auf verschiedener Hardware laufen. So kann beispielsweise ein vernetztes Fahrzeug anstatt mit einem Dieselmotor auch mit einem Hybridantrieb ausgerüstet werden. Der Antrieb ist jeweils mit einem spezifischen Steuergerät versehen, welches standardisierte Daten mit anderen Steuergeräten austauscht.

Damit wird das Netzwerk aus Datenquellen und Datensenken unabhängig von den hinterlegten Programmroutinen über Parameter definiert.

Dabei hat es sich als sehr vorteilhaft erwiesen, wenn die Knoten jeweils mit einem Steuerprogramm und Standardfunktionen ausgerüstet sind.

Hierdurch kann das Steuerprogramm von Standardfunktionen entkoppelt werden, auf die das Steuerprogramm zugreifen kann.

Äußerst vorteilhaft ist es in diesem Zusammenhang auch, wenn die Kommunikationsfunktionen als feste Programmroutinen hinterlegt sind.

Hierdurch wird dem Steuerprogramm Zugriff auf Kommunikationsfunktionen ermöglicht.

Dabi ist es gemäß einer weiteren Ausgestaltung der Erfindung sehr vorteilhaft, wnen die Programmroutinen für die Kommunikationsfunktionen parametrierbar sind.

Damit kann der Zugriff auf die Kommunikationsfunktionen durch Parameter angepasst werden.

Äußerst vorteilhaft ist es dabei auch, wenn die Parametrierung über eine externe Konfigurationsdatei erfolgt.

Damit lassen sich die Parameter unabhängig vom Steuerprogramm anpassen. Es ist sogar eine Anpassung während der Laufzeit des Steuerprogrammes denkbar.

Gemäß einer weiteren Ausgestaltung der Erfindung ist es äußerst vorteilhaft, wenn Start- und Zieladresse der Kommunikationsfunktionen parametrierbar sind.

Hierdurch wird eine sehr große Flexibilität gewährleistet. Es lassen sich problemlos Komponenten ggf. im laufenden Betrieb austauschen.

Weiterhin ist es sehr vorteilhaft, wenn die den Kommunikationsfunktionen zugrundeliegenden Protokolle parametrierbar sind.

Damit können die einzelnen Module oder zumindest Programmroutinen auch für verschiedenste Anwendungen eingesetzt werden und können beispielsweise auf Feldbus, Ethernet oder dergleichen aufbauen.

Im folgenden wird die Erfindung anhand eines Ausführungsbeispiels veranschaulicht.

Die Erfindung wird anhand der Steuerung einer Pistenraupe veranschaulicht, ist jedoch auf beliebige Steuerungs- und Regelsysteme übertragbar.

Im Fahrzeug sind die Steuerungen und Sensoren als Einheiten aufgebaut, die über ein Bussystem miteinander verbunden sind. Jeder Einheit bildet dabei einen Netzwerkknoten.

Knoten, die Daten erfassen und weitergeben sind dabei Datenquellen, solche, die Daten empfangen und weiterverarbeiten sind Datensenken.

Wird nun von einer Datenquelle beispielsweise die Motordrehzahl erfasst, so wird diese in einer Nachricht kodiert und versandt. Hierzu gibt der Programmcode der Datenquelle den Befehl, das Datenpaket zu versenden. Spezielle Kommunikationsfunktionen senden das Datenpaket an die Datensenke.

Dabei greifen die Kommunikationsfunktionen auf eine Parameterdatei zurück, in der spezifiziert ist, welches Datenpaket mit welchem Protokoll über welches Bussystem an welche Datensenke versandt werden soll.

Diese Parameterdatei ist dabei unabhängig vom Programmcode.

Der Programmcode wird beispielsweise in einer Laufzeitumgebung oder einer virtuellen Maschine ausgeführt und ist damit unabhängig von der verwendeten Hardware. Es können dabei standardisierte Laufzeitumgebungen wie beispielsweise Java eingesetzt werden. Es kann auch eine Abstraktion zwischen hardwareabhängigen Routinen und hardwareunabhängigen Routinen vorgenommen werden, so daß der eigentliche Programmcode hardwareunabhängig ist und auf hardwareabhängige Routinen zugreift. Gerade auf Embedded-Systemen ist dies besonders sinnvoll, da dort ein Betriebssystem in der Regel nicht vorgesehen ist.

Die Kommunikationsfunktionen stellen eine standardisierte Schnittstelle für den Programmcode zur Verfügung, auf die dieser zugreifen kann.

Die Kommunikationsfunktionen können hardwarespezifisch sein, oder aber über spezielle Hardwaretreiber auf die Hardware und damit die physikalischen Schnittstellen zugreifen.

Ebenso kann nicht nur die Kommunikation mit anderen Knoten derart abstarhiert werden, sondern es ist auch denkbar, daß Mikrokontroller, welche Sensoren auswerten und so als Datenquellen dienen, auf dieselbe Art und Weise auf die Sensoren zugreifen, so daß auch hier Hardwareunabhängigkeit erreicht wird.

Die Datensenken verarbeiten die empfangenen Datenpakete. Um diese empfangen zu können, greift der dortige Programmcode ebenfalls auf Kommunikationsfunktionen zu, welche die Datenpakete empfangen und an den Programmcode übergeben.

Auch hier ist der Programmcode hardwareunabhängig, wohingegen die Kommunikationsfunktionen direkt oder indirekt auf die Hardware zugreifen.

Um bei dem Beispiel der Pistenraupe zu bleiben: Wird nun der Dieselmotor gegen ein Hybridagregat ausgetauscht, so muss nur die Parametrierung der Steuereinheit des Hybridagregats entsprechend Parametriert werden, so daß Drehzahlinformationen an eine Anzeige, welche durch eine auf einem Mikrokontroller laufende App dargestellt werden kann.

Der Anzeige Mikrokontroller "merkt" dabei nicht einmal, daß ein anderes Antriebsagregat verbaut ist, da es seine einzige Aufgabe ist, die Drehzahlinformationen anzuzeigen.

Ebenso ist es denkbar, daß ein CAN Bus System auf Ethernet umgerüstet wird.

Dazu werden die Kommunikationsschnittstellen ausgetauscht und die Parametrierung der einzelnen Knoten entsprechend angepasst.

Der Programmcode kann unverändert übernommen werden.

Eine erneute Evaluierung und umfangreiche Tests entfallen.

Auch kann die Parametrierung im laufenden Betrieb geändert werden. Dies ist mit herkömmlichen Ansätzen, bei denen die Kommunikation direkt im Programmcode hinterlegt ist, nicht möglich.

Vielmehr muss bei jeder noch so kleinen Änderung der Code komplett neu kompiliert und getestet werden.

Mit dem erfindungsgemäßen Ansatz wird zudem erreicht, daß Programmcode oftmals für verschiedenste Anwendungen eingesetzt werden kann, wodurch die Zuverlässigkeit von Geräten und Anlagen aufgrund langer und weitreichender Erfahrungen mit dem jeweiligen Programmcode erhöht wird.

## Patentansprüche

1. Verfahren zur Übermittlung von Daten in einem verteilten System aus programmierbaren Steuerungen, wobei zwischen Datenquellen und Datensenken, die beide jeweils einen Knoten im verteilten System darstellen, Daten übertragen werden, wobei die jeweils miteinander kommunizierenden Datenquellen und Datensenken über Parameter bestimmt werden, **dadurch gekennzeichnet, daß** programmierbaren Steuerungen als Embedded-Systeme ausgeführt sind, die kein Betriebssystem aufweisen und daß die Programmroutinen, Kommunikationsfunktionen, Hardware APIs virtualisiert sind und daß die Programmroutinen, Kommunikationsfunktionen und Protokolle hardwareunabhängig ausgeführt sind, wodurch eine Abstraktion zwischen hardwareabhängigen und hardwareunabhängigen Routinen vorgenommen wird.

2. Verfahren nach Anspruch 1, **dadurch gekennzeichnet, daß** die Knoten jeweils mit einem Steuerprogramm und Standardfunktionen ausgerüstet sind.

3. Verfahren nach Anspruch 1 oder 2, **dadurch gekennzeichnet, daß** die Kommunikationsfunktionen als feste Programmroutinen hinterlegt sind.

4. Verfahren nach Anspruch 3, **dadurch gekennzeichnet, daß** die Programmroutinen für die Kommunikationsfunktionen parametrierbar sind.

5. Verfahren nach Anspruch 4, **dadurch gekennzeichnet, daß** die Parametrierung über eine externe Konfigurationsdatei erfolgt.

6. Verfahren nach einem der vorangehenden Ansprüche, **dadurch gekennzeichnet, daß** Start- und Zieladresse der Kommunikationsfunktionen parametrierbar sind.

7. Verfahren nach einem der vorangehenden Ansprüche, **dadurch gekennzeichnet, daß** die den Kommunikationsfunktionen zugrundeliegenden Protokolle parametrierbar sind.

## Claims

1. Method for transmitting data in a distributed system of programmable controllers, whereby data is transmitted between data sources and data sinks, each of which represents a node in the distributed system, whereby the data sources and data sinks communicating with each other are determined via parameters, **characterized in that** programmable controllers are designed as embedded systems that do not have an operating system and that the program routines, communication functions, hardware APIs are virtualized and that the program routines, communication functions and protocols are designed to be hardware-independent, whereby an abstraction is made between hardware-dependent and hardware-independent routines.

2. Method according to claim 1, **characterized in that** the nodes are each equipped with a control program and standard functions.

3. Method according to claim 1 or 2, **characterized in that** the communication functions are stored as fixed program routines.

4. Method according to claim 3, **characterized in that** the program routines for the communication functions can be parameterized.

5. Method according to claim 4, **characterized in that** the parameterization takes place via an external configuration file.

6. Method according to one of the preceding claims, **characterized in that** the start and destination addresses of the communication functions can be parameterized.

7. Method according to one of the preceding claims, **characterized in that** the protocols underlying the communication functions can be parameterized.

## Revendications

1. Procédé de transmission de données dans un système distribué d'automates programmables, dans lequel des données sont transmises entre des sources de données et des récepteurs de données, dont chacun représente un noeud dans le système distribué, les sources de données et les récepteurs de données communiquant entre eux étant déterminés via des paramètres, **caractérisé en ce que** les automates programmables sont conçus comme des systèmes embarqués sans système d'exploitation et que les routines de programme, les fonctions de communication, les API matérielles sont virtualisées et que les routines de programme, les fonctions de communication et les protocoles sont implémentés indépendamment du matériel, moyennant quoi une abstraction est effectué entre les routines dépendantes du matériel et indépendantes du matériel.

2. Procédé selon la revendication 1, **caractérisé en ce que** les noeuds sont équipés chacun d'un programme de contrôle et de fonctions standards.

3. Procédé selon la revendication 1 ou 2, **caractérisé en ce que** les fonctions de communication sont stockées sous forme de routines de programme fixes.

4. Procédé selon la revendication 3, **caractérisé en ce que** les routines de programme pour les fonctions de communication peuvent être paramétrées.

5. Procédé selon la revendication 4, **caractérisé en ce que** le paramétrage s'effectue via un fichier de configuration externe.

6. Procédé selon l'une des revendications précédentes, **caractérisé en ce que** les adresses de départ et de destination des fonctions de communication sont paramétrables.

7. Procédé selon l'une des revendications précédentes, **caractérisé en ce que** les protocoles sous-jacents aux fonctions de communication sont paramétrables.
